(19) Europäisches Patentamt

European Patent Office

Office européen des brevets

(11) **EP 4 485 736 A1**

(12) **EUROPEAN PATENT APPLICATION**

(43) Date of publication:
01.01.2025 Bulletin 2025/01

(21) Application number: 23182850.0

(22) Date of filing: 30.06.2023

(51) International Patent Classification (IPC):
*H02J 3/18* (2006.01)   *H02M 5/293* (2006.01)
*H02P 13/06* (2006.01)   *H02M 1/12* (2006.01)

(52) Cooperative Patent Classification (CPC):
**H02M 5/293; H02J 3/1878;** H02M 1/12; H02P 13/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventors:
• MOGOROVIC, Marko
 **1205 Geneva (CH)**
• ALVES, Roberto
 **722 14 Västerås (SE)**

(74) Representative: **Vossius & Partner
Patentanwälte Rechtsanwälte mbB
Siebertstraße 3
81675 München (DE)**

(54) **TRANSFORMER**

(57) The present disclosure relates to a three-phase transformer comprising a primary winding and a secondary winding for each phase of the three-phase transformer, at least one additional winding per phase, wherein each additional winding is connected to a power electronics tap changer, PETC, having respective outputs, wherein each additional winding comprises a first connection point and a second connection point, and wherein the first connection point and the second connection point are associated with different phases.

**Fig. 1**

**Description**

The present disclosure relates to a transformer and in particular to a three-phase transformer capable of adding an in-quadrature voltage vector and/or creating a phase-shift of a total output voltage, with respect to the input voltage.

Transformers are central components of alternating current (AC) electric systems, enabling power transfer between different voltage levels, from high voltage AC (HVAC) to medium voltage AC (MVAC) and low voltage AC (LVAC). Generally, transformers are passive magnetic components.

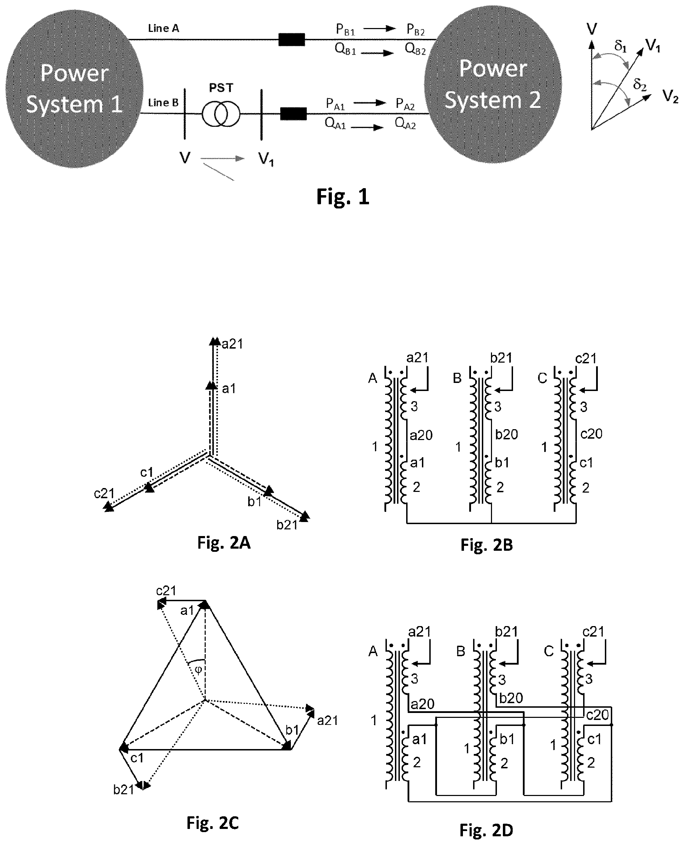

In order to provide for voltage and power flow regulation, a voltage regulating transformer (tap changer) for regulating the output voltage or a Phase-Shift Transformer (PST), which also employs tap changers but connected differently, is used in the grid. Phase-shifting transformers help protect transmission lines and high-voltage equipment (normally < 400 kV) from thermal overloads, improve system stability, and control power flow between different networks. Phase-shifting transformers (PST) help to optimize the utilization and/or losses of existing transmission lines, especially those carrying a large amount of energy generated by renewable energy sources. Fig. 1 shows an exemplary schematic view of power flow regulation between two grids as known in the art.

With conventional PSTs, benefits of avoiding transmission line overloading in normal operation, avoiding post-contingency transmission line overloads, increasing N-1 secure capacity of transmission corridors, controlling unscheduled load flows, keeping load flows on contract paths and minimizing overall losses in the network may be achieved.

With the ever-increasing complexity and installed power of actively controlled (e.g., power electronics (PE) converter interfaced) modern electric applications, the needs of the modern electric systems are constantly evolving, requiring more and more flexibility - enabled by actively controlled nodes. Flexible AC Current Transmission Systems (FACTS) are used in cases where maximum flexibility is needed. However, this often entails significant costs. Depending on the needs, simpler and more cost-effective alternatives with less features also exist. Two very well-known and widely used such solutions are transformers with on-load tap-changer(s) (OLTC) that can, depending on winding connections, provide a regulation of steady state voltage (sometimes referred to as tap-changers in literature) or phase (referred to as phase-shifting) in designed discrete steps.

While OLTCs are relatively cost-effective, there are several limitations and drawbacks to that solution:

- Fast dynamic control not possible. OLTC is a mechanical device and thus the regulation action is several orders of magnitude slower compared to electrical time constants. Thus, from the electric point of view, this can be considered a static control actuator-allowing only the steady state regulation.

- Complicated and expensive winding needed. To implement an OLTC, a section of transformer winding, or a designated separate winding needs to be specially constructed with many connection leads over which the OLTC connector can slide to select the desired voltage vector.

- Continuous control not possible. OLTC can select voltage vectors only in discrete steps, according to the winding design.

- Micro arcing. Mainly due to the leakage inductances of the windings, the step change in the circuit configuration, every time when the OLTC slides from one to the next winding lead, local overvoltages may be produced that lead to small (controlled) arcing events between the OLTC contactor and the winding leads. This results in ageing of the OLTC and lead contacts, as well as pollution of the transformer oil.

Another solution used in the prior art is the so-called hybrid transformer (HT) or power electronics enhanced transformer (PEET). It provides a solution in-between a FACT, that considers a full power rated power electronics (PE) converter, and transformers with voltage or phase-shift regulation enabled by OLTC. HTs consider a transformer with a tertiary winding that feeds a back-to-back AC/DC-DC/AC converter arrangement, capable of injecting an arbitrary dynamically-controllable voltage vector in series to the transformer voltage. The magnitude of this injected voltage vector is limited by the designed power of the back-to-back converters. This allows to design a solution for dynamic control of the voltage and phase shift within a designed range, limited by the installed power of the converter, that can be much lower than the full transformer power.

Some drawbacks of this solution are:

- It uses a full back-to-back connection of converters (two conversion stages) that has an impact on efficiency, need for cooling and ultimately the cost, due to many switching devices.

- It requires a DC bus with significant installed capacitance. This leads again to additional cost, weight, and volume.

- DC bus protection is needed, typically a breaking chopper is put in place which is yet another additional component.

- It needs sophisticated control: (i) DC bus voltage control, (ii) breaking chopper control, (iii) Phase-locked-loop for synchronization with AC utility, and all other grid connected converter control features such as vector control, active harmonic filtering etc. This leads to a large control overhead, both from the point of view of SW and HW development - same as for the full power converter.

An object of the present disclosure is to remedy or minimize at least some of the above-mentioned deficiencies of the prior art and to provide a dynamic, versatile and cost-effective transformer.

The present disclosure proposes a solution that uses less semiconductor switches as compared to a hybrid transformer, does not have a DC bus, and can work with significantly simpler control of both in terms of software (SW) and hardware (HW). This leads to a more robust and cost-effective solution, with a slight compromise on auxiliary features as compared to HT.

In particular, the present disclosure provides a solution for enhancing the functionalities of a standard passive three phase transformer to provide a similar functionality to a Flexible AC Current Transmission (FACT) system - phase-shift, dynamic voltage and power control within designed range, power factor correction, phase load balancing and voltage harmonic and sag suppression. The phase shift control proposed through power electronics is very fast and allows fine control. It is necessary if it is required to control the power flow quickly, during transient and dynamic conditions. The proposed control scheme is simpler, faster and easier to implement than previously proposed solutions. The expected cost of the proposed solution is lower than the FACTS devices for similar functionalities and application ranges.

In the following description, although numerous features may be designated as optional, it is nevertheless acknowledged that all features comprised in the independent claims are not to be read as optional.

The present disclosure relates to a three-phase transformer comprising a primary winding and a secondary winding for each phase of the three-phase transformer, at least one additional winding per phase, wherein each additional winding is connected to a power electronics tap changer, PETC, having respective outputs, wherein each additional winding comprises a first connection point and a second connection point, and wherein the first connection point and the second connection point are associated with different phases.

Various embodiments may preferably implement the following features.

Preferably, the additional winding is configured to add an in-quadrature voltage vector and/or create a phase-shift of a total output voltage.

Preferably, the at least one PETC is configured to add an in-quadrature voltage vector and/or create a phase shift of a total output voltage.

Preferably, the additional windings are provided on a secondary side of the three-phase transformer, an output of the secondary winding of a first phase is connected to the first connection point of the additional winding of a third phase, an output of the secondary winding of a second phase is connected to the first connection point of the additional winding of the first phase, and an output of the secondary winding of the third phase is connected to the first connection point of the additional winding of the second phase.

Preferably, each PETC comprises at least one first switch connected to the first connection point and at least one second switch connected to the second connection point.

Preferably, each PETC comprises a third connection point and at least one third switch, wherein each PETC is configured to create a bi-directional phase shift.

Preferably, the switches are semiconductor switches.

Preferably, the switches are configured to dynamically and continuously output a voltage of the respective additional winding.

Preferably, the transformer further comprises a controller configured to control the PETCs.

Preferably, the at least one additional winding is provided on a primary side or a secondary side.

Preferably, the three phases are connected as a delta connection or a star connection.

Preferably, the secondary windings are connected as a delta connection and the additional windings are connected as a star connection, or wherein the secondary windings are connected as a star connection and the additional windings are connected as a delta connection.

Preferably, the additional windings are provided on a secondary side of the three-phase transformer, wherein an output of the secondary winding of a first phase is connected to an input of the secondary winding of a second phase, an output of the secondary winding of the second phase is connected to an input of the secondary winding of a third phase, and an output of the secondary winding of the third phase is connected to an input of the secondary winding of the first phase; and wherein the output of the secondary winding of the first phase is connected to the first connection point of the additional winding of the third phase, the output of the secondary winding of the second phase is connected to the first connection point of the additional winding of the first phase, and the output of the secondary winding of the third phase is connected to the first connection point of the additional winding of the second phase.

Preferably, the additional windings are provided on a secondary side of the three-phase transformer, wherein the first connection point of the additional winding of a first phase is connected to the input of the secondary winding of the second phase and the output of the PETC of the third phase, the first connection point of the additional winding of a second phase is connected to the input of the secondary winding of the third phase and the output of the PETC of the first phase, and the first connection point of the additional winding of the third phase is connected to the input of the secondary winding of the first phase and the output (b) of the PETC of the second phase.

Preferably, the transformer comprises at least one further additional winding, wherein the further additional winding is connected to an additional PETC and is connected in-phase. Preferably, the additional PETC (4) is configured to provide in-phase voltage control.

Preferably, the controller is configured to control the PETC to cancel voltage harmonics. Preferably, the controller is configured to control the PETC to cancel voltage sags.

Other aspects, features, and advantages will be apparent from the summary above, as well as from the description that follows, including the figures and the claims.

The disclosure will be further described with reference to the figures. Therein,

Fig. 1 shows a schematic overview of power flow regulation between two power grids,
Figs. 2A and 2B show an exemplary vector diagram and connection scheme, respectively, of a voltage regulating transformer using tap changers according to an embodiment of the present disclosure,
Figs. 2C and 2D show an exemplary vector diagram and connection scheme, respectively, of a phase regulating transformer using tap changers according to an embodiment of the present disclosure,
Figs. 3A and 3B show a comparison between a transformer having an OLTC and a transformer having a PETW,
Figs. 4A and 4B show exemplary schematic wiring diagrams of a PETC with 2 and 3 terminals, respectively, according to an embodiment of the present disclosure,
Figs. 5A to 5D show exemplary vector diagrams and electric schemes of connections according to embodiments of the present disclosure, and
Fig. 6 shows an exemplary depiction of a voltage vector control zone in a system as shown in Fig. 5.

The following description will focus on additional windings/wirings on a secondary side of a transformer. However, the features as disclosed herein, although not explicitly shown, are equally applicable to a primary side of a transformer. The terms "primary" and "secondary" as used herein are therefore not to be understood as limiting and may be substituted by "first" and "second". In other words, the primary winding may be the first winding and the secondary winding may be the second winding or vice versa. The additional winding may be provided on the same side of the transformer as the second winding. Even if not explicitly indicated, the same or similar elements in the figures and the description may be denoted by the same reference numerals. In some figures, the structure of only one phase is shown but this is not to be understood as limiting and the shown structure can be applied to the other phases as well.

The disclosure generally relates to a three-phase transformer with a first phase A, a second phase B and a third phase C, wherein the positions and wirings of the phases are merely shown as examples in the figures and other connections may be possible. Moreover, the transformer comprises a primary winding 1 per phase A, B, C (primary side) as well as a secondary winding 2 per phase A, B, C (secondary side). An additional winding 3 per phase A, B, C is provided. In the figures, the additional winding 3 is provided at the secondary side but it may also be provided at the primary side (not shown). Moreover, a further additional winding (not shown) may be provided at the same or the other side as the additional winding 3.

In the exemplary figures, each secondary winding 2 comprises an output a1, b1, c1. Moreover, each additional winding 3 comprises a first connection point a20, b20, c20 as well as a second connection point a21, b21, c21. The first connection point a20, b20, c20 and the second connection point a21, b21, c21 are provided at opposing ends of the respective additional winding 3.

As stated above, the additional winding(s) 3 may also be provided on the primary side, thus leading to a mirrored configuration with respect to the configuration shown in the figures.

The phases A, B, C of the electric signals are offset by 120°.

Figs. 2A to 2D shows exemplary vector diagrams and electric schemas of transformers with on-load tap changers (OLTC).

In particular, Fig. 2B shows a three-phase system having a primary winding 1 and secondary winding 2 per phase. In addition, an OLTC is connected to the additional winding 3 in series to each secondary winding 2 of each phase A, B, C for voltage regulation. As described above, the OLTCs are configured to mechanically connect or disconnect the additional winding turns or taps, thus changing the resulting total output voltage. An exemplary resulting vector diagram is shown in Fig. 2A, wherein the dashed line indicates the resulting output voltages without the additional winding(s) 3 and the dotted line indicates the resulting output voltages with the additional winding(s) 3.

In Fig. 2D, the phases A, B, C are interconnected via the additional winding to provide a unidirectional phase shift.

In particular, the output a1 of the secondary winding 2 of phase A is connected to the first connection point c20 of the additional winding 3 of phase C, the output b1 of the secondary winding 2 of phase B is connected to the first connection point a20 of the additional winding 3 of phase A, and the output c1 of the secondary winding 2 of phase C is connected to the first connection point b20 of the additional winding 3 of phase B. In the configuration of Fig. 2D, each additional winding 3 forms part of an OLTC and is thus configured to provide a unidirectional phase shift. Fig. 2C shows an exemplary resulting vector diagram of the configuration according to Fig. 2D, wherein the dashed line indicates the resulting output voltages without the additional winding(s) 3 and the dotted line indicates the resulting output voltages with the additional winding(s) 3 including a phase shift <p.

As indicated above, other connections are possible, and the present disclosure is not limited to the ones shown in Figs. 2B and 2D.

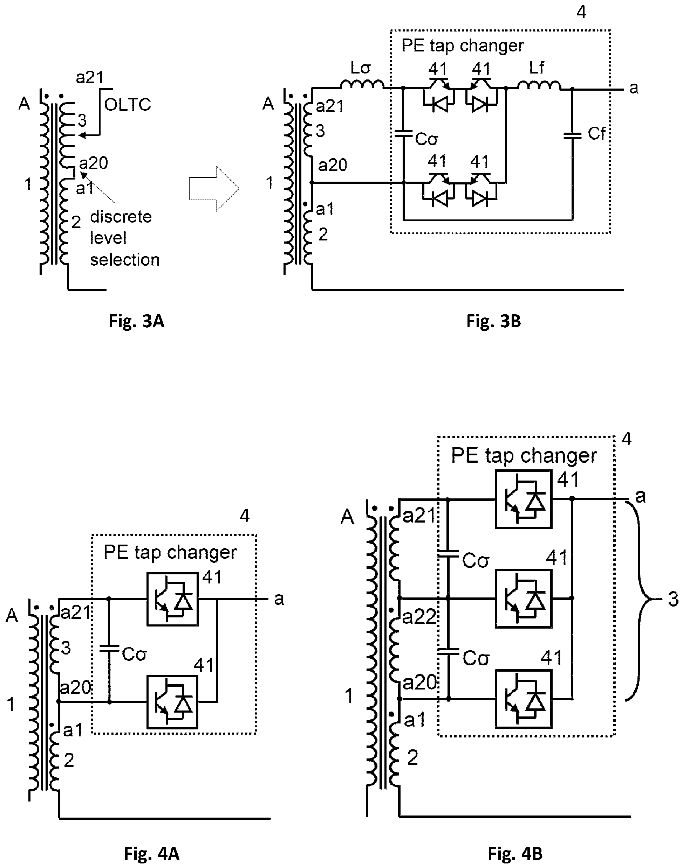

Fig. 3 shows a comparison of an OLTC (Fig. 3A) and a power electronics (PE) tap changer (PETC), also referred to as a power electronics taped winding (PETW, Fig. 3B) for one phase A only. As described above, the OLTC (additional winding 3) is connected to the output a1 of the secondary winding 2 and is configured to add or remove a discrete winding section, thus adding or removing a certain voltage (depending on the winding length).

In Fig. 3B, the additional winding 3 is connected to a PE tap changer 4 to substitute the OLTC in Fig. 3A. The first connection point a20 of the additional winding 3 is connected to the output a1 of secondary winding 2 of the phase A. The first connection point a20 and the second connection point a21 of the additional winding 3 are connected to a PETC 4. The PETC 4 may comprise at least one switch 41. The switch(es) 41 may be similar or identical in components and wiring. The PETC 4 may further comprise one or more capacitors $C_\sigma$, $C_f$ and an inductance $L_f$. Moreover, in the circuit model, an inductance $L_\sigma$ (leakage inductance) is present between the second connection point a21 and the PETC 4. The output a, of the PETC 4 provides the resulting total output voltage. Although Fig. 3 is only shown for phase A, the structure for phases B and C is equal.

By using a PE tap changer as shown in Fig. 3B, the voltage of the additional winding 3 can be dynamically and continuously added to the output voltage of the secondary winding 2.

A PETC is essentially utilizing pulse width modulation (PWM) to produce a resulting average voltage vector with controllable amplitude, depending on the set duty-cycle - i.e. the portion of the switching period where the top semiconductor switches are conducting and the bottom semiconductor switches are blocking. The relation between the total (equivalent) voltage of the secondary side $V_a$ and the voltages of the secondary side (wherein $V_{a1}$ is the voltage of the secondary winding 2 and $V_{a2}$ is the voltage of the additional winding 3) can be described by equation (1) as follows:

$$V_a = D(V_{a1} + V_{a2}) + (1 - D)V_{a1} = V_{a1} + DV_{a2} \tag{1}$$

For the concrete example of Fig. 3, depending on the duty cycle D, the average voltage vector of the tapped winding can vary from 0 (D = 0 - bottom semiconductors always on and top off) up to the full tapped winding voltage (D = 1 - top semiconductors always on and bottom off).

Fig. 4 is a further simplified schematic depiction of a PETC 4, wherein only one phase A is shown. The structure can also be employed to the other phases B and C. While Fig. 4A shows essentially the same configuration as Fig. 3B in a simplified manner (two-terminal configuration), Fig. 4B shows a three-terminal configuration, i.e., a configuration with a third connection point a22. The third connection point a22 may be provided between the first connection point a20 and the second connection point a21. The additional winding 3 may thus be provided between the first connection point a20 and the second connection point a21.

An additional switch 41 may also be provided in the PETC 4 in order to add the respective winding sections, i.e., the sections between the first connection point a20 and the third connection point a22 and/or between the third connection point a22 and the second connection point a21.

With this three-terminal configuration, a bi-directional phase shift can be achieved by controlling the switches 41 accordingly. The same effect can be achieved by providing a further additional winding (or two additional windings 3) in two-terminal configuration connected in series.

The structure of Figs. 3 and 4 can be equally applied to all phases A, B, C on either the primary or the secondary side.

The above-described structures and features can be fully applied to the description below referring to embodiments of the present disclosure. According to an embodiment of the present disclosure, a PETC is used for enabling phase-shift control of three-phase transformers. Thus, a three-phase controller according to the present disclosure comprises a primary winding 1 and a secondary winding 2 for each phase A, B, C of the three-phase transformer, at least one additional winding 3 per phase A, B, C. Each additional winding 3 is connected to a power electronics tap changer, PETC 4. Each additional winding 3 comprises a first connection point a20, b20, c20 and a second connection point a21, b21, c21. The first connection point a20, b20, c20 and the second connection point a21, b21, c21 are associated with different phases A, B, C.

That is, the first connection point a20, b20, c20 and the second connection point a21, b21, c21 are connected such the additional winding 3 of one phase A, B, C is connected to the secondary winding 2 of another one of the phases A, B, C. In particular, the connection creates an in-quadrature voltage vector. By the inter-phase connection, components of the voltage vector from one phase are added to another phase, thus creating the in-quadrature component. The secondary windings 2 and the additional windings 3 are connected so that the output voltages are phase shifted.

The proposed structure may be referred to as a direct switched power electronics enhanced transformer (DSPEET).

Thus, the additional windings 3 may be configured to add an in-quadrature voltage vectors and/or create a phase-shift of a total output voltage. In particular, the at least one PETC 4 may be configured to add an in-quadrature voltage vector and/or create a phase shift of a total output voltage.

The PETC 4 structure of Figs. 3B, 4A or 4B may be applied to the connection scheme of Fig. 2D. Thus, the additional windings 3 may be provided on a secondary side of the three-phase transformer. In this embodiment, an output a1 of the secondary winding 2 of a first phase A is connected to the first connection point c20 of the additional winding 3 of a third phase C, an output b1 of the secondary winding 2 of a second phase B is connected to the first connection point a20 of the additional winding 3 of the first phase A and an output c1 of the secondary winding 2 of the third phase C is connected to the first connection point b20 of the additional winding 3 of the second phase B.

Each PETC 4 may comprise at least one first switch 41 connected to the first connection point a20, b20, c20 and at least one second switch 41 connected to the second connection point a21, b21, c21.

Each PETC 4 may comprise a third connection point a22 and at least one third switch 41. Each PETC 4 may be configured to create a bi-directional phase shift. As described above, the third connection point may be provided between the first connection point a20, b20, c20 and the second connection point a21, b21, c21 and may be provided with at least one further switch 41 (cf. Fig. 4B).

In an embodiment, the switches 41 are semiconductor switches. In an embodiment, the switches 41 are configured to dynamically and continuously output a voltage of the respective additional winding 3.

The transformer may further comprise a controller configured to control the PETCs 4.

As indicated above, the at least one additional winding 3 may be provided on a primary side or a secondary side.

In an embodiment, the three phases A, B, C are connected as a delta connection or a star connection. In particular, according to an embodiment, the secondary windings 2 are connected as a delta connection and the additional windings 3 are connected as a star connection or the secondary windings 2 are connected as a star connection and the additional windings 3 are connected as a delta connection.

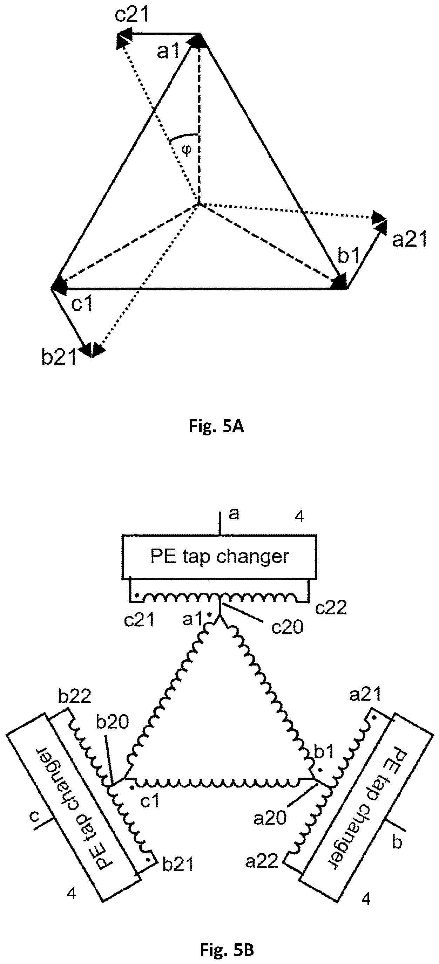

Fig. 5B shows a delta connection of the secondary windings 2 and a star connection of the additional windings. The wiring corresponds to the structure shown in Fig. 2D with PETCs.

In Fig. 5B, the additional windings 3 are provided on a secondary side of the three-phase transformer. An output a1 of the secondary winding 2 of a first phase A is connected to an input of the secondary winding 2 of a second phase B, an output b1 of the secondary winding 2 of the second phase B is connected to an input of the secondary winding 2 of a third phase C and an output c1 of the secondary winding 2 of the third phase C is connected to an input of the secondary winding 2 of the first phase A.

Moreover, the output a1 of the secondary winding 2 of the first phase A is connected to the first connection point c20 of the additional winding 3 of the third phase C, the output b1 of the secondary winding 2 of the second phase B is connected to the first connection point a20 of the additional winding 3 of the first phase A and the output c1 of the secondary winding 2 of the third phase C is connected to the first connection point b20 of the additional winding 3 of the second phase B. The outputs of the PE tap changers (PETC 4) are designated a, b, and c.

In other words, the secondary winding 2 of phase A and the additional winding 3 of phase C are connected and may form the total output voltage of phase A at the output a of the PETC 4. That is, depending on the switching state of the PETC 4, a phase shift of the output voltage at point a of phase A may be achieved.

In this example, the same applies to the secondary winding 2 of phase B and the additional winding 3 of phase A as well as the secondary winding 2 of phase C and the additional winding 3 of phase B.

The PETCs 4 may be in a two-terminal configuration or, as shown in Fig. 5B, in a three-terminal configuration allowing for bi-directional phase shift (see below).

Fig. 5A shows an exemplary resulting vector diagram, wherein the dashed line indicates the resulting output voltages without the additional winding(s) 3 and the dotted line indicates the resulting output voltages with the additional winding(s) 3 including a phase shift <p.

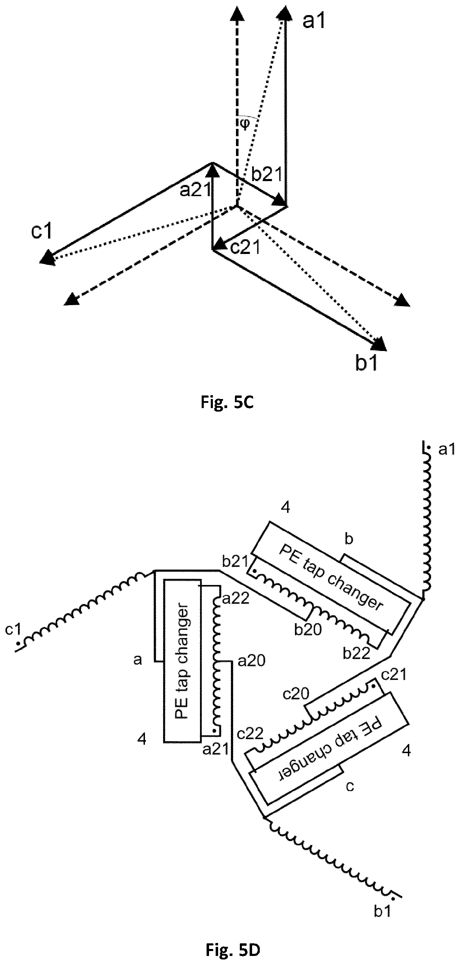

In Fig. 5D, a star connection of the secondary windings 2 and a delta connection of the additional windings 3 is shown. In the figure, the additional windings 3 are provided on a secondary side of the three-phase transformer. The first connection point a20 of the additional winding 3 of a first phase A is connected to the input of the secondary winding 2 of the second phase B and the output c of the PE tap changer of the third phase C. The first connection point b20 of the additional winding 3 of a second phase B is connected to the input of the secondary winding 2 of the third phase C and the output a of the PE tap changer of the first phase A. The first connection point c20 of the additional winding 3 of a third phase C is connected to the input of the secondary winding 2 of the first phase A and the output b of the PE tap changer of the second phase B. The total voltage outputs in this configuration are the outputs a1, b1 and c1 of the of the respective secondary windings 2.

The resulting vector diagrams of the connection according to Fig. 5D are shown in Fig. 5C, wherein the dashed line indicates the resulting output voltages without the additional winding(s) 3 and the dotted line indicates the resulting output voltages with the additional winding(s) 3 including a phase shift <p.

The PETCs 4 may be in a two-terminal configuration, or a three-terminal configuration as described above.

In the examples shown in Fig. 5B and 5D, the first connection points a20, b20, c20 are provided between the respective second connection points a21, b21, c21 and third connection points a22, b22, c22. In the shown three-terminal configuration, a bidirectional phase shift is possible. In case the first connection points a20, b20, c20 coincide with either the second connection points a21, b21, c21 or third connection points a22, b22, c22, a unidirectional phase shift is achieved. This may correspond to the two-terminal configuration. Also, the first connection points a20, b20, c20 may be interchanged with the second connection points a21, b21, c21 or the third connection points a22, b22, c22.

All configurations and wirings presented above are applicable to Figs. 5B and 5D.

In an embodiment, the transformer comprises at least one further additional winding, wherein the further additional winding is connected to an additional PETC 4 and is connected in-phase. The additional PETC 4 may be configured to provide in-phase voltage control.

In an embodiment, the controller is configured to control the PETC(s) 4 to cancel voltage harmonics. The controller may also be configured to control the PETC(s) 4 to cancel voltage sags.

As shown in Figs. 3B and 4A, the depicted PETC 4 may be a two terminal version or have multiple terminals such as the version with three terminals as shown in Fig. 4B. This provides for bi-directional phase shift.

Bi-directional phase shift can also be achieved with a unidirectional PETC 4 winding and additional switches 41 that could connect the winding with PETC 4 in opposite direction in the moment when there is no current flowing through it, when the phase shift is 0.

In addition to the described PETC winding connection for phase-shift control, an additional PETC winding can be added per-phase that would be in-phase with the phase winding and allow voltage control, as shown in Fig. 2B. This can, as well as for the phase shifting windings, be done either from primary or secondary side.

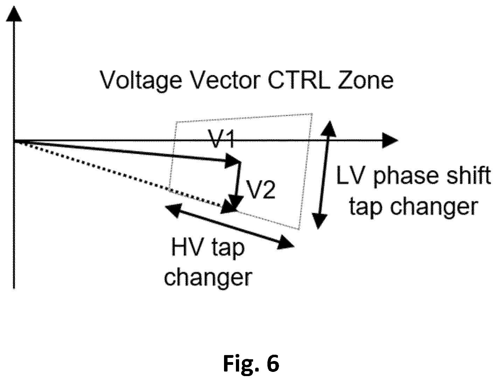

A principal depiction of the voltage vector control zone for the proposed solution (DSPEET) with phase shifting PETC on secondary and voltage control PETC on the primary side is shown in Fig. 6.

Dynamic control of the voltage vector magnitude and phase allows to dynamically control the active and reactive power flows within the grid, as illustrated in Fig. 1. It also allows to filter out voltage sags and harmonics, within control bandwidth of the PETC.

As compared to OLTC, PETW provides several benefits:

- It allows continuous and dynamic control of the magnitude of the tapped voltage vector.

- It needs at minimum only two winding leads, at the beginning and the end of the winding, depending on the desired implementation of the PETW.

- It does not suffer from local micro arcing thanks to the efficient switching of power semiconductors.

- There is no mechanical wear as there are no moving components.

As opposed to mere voltage regulation with PETC, the present disclosure enables phase-shift control of 3-phase transformers, as shown in Fig. 5. Two possible solutions to produce a dynamically regulated in-quadrature voltage vector using a combination of delta and star winding connections have been illustrated, but the present disclosure is not limited thereto. The configuration of Figs. 5C and 5D may be particularly interesting for higher voltages as it allows for the PETC to be at the ground potential.

The tapped winding may be designed to have a proportional voltage to the main winding and the regulation range. In the provided illustration, bi-directional phase shift is assumed and thus the taped winding has either 3 terminals, at both ends and the middle, or can be realised with two 2-terminal windings connected in series.

By controlling the duty cycle of the associated PETC, the magnitude of the in-quadrature vector, depicted in the figures, and thus the phase shift of the resulting voltage vectors can be controlled.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

List of reference signs

| 1 | Primary winding |
|---|---|
| 2 | Secondary winding |
| 3 | Additional winding |
| 4 | PETC |
| 41 | Switch |
| a, b, c | PETC Output |
| A | First phase |
| a1 | Output secondary winding |
| a20 | First connection point |
| a21 | Second connection point |
| a22 | Third connection point |
| B | Second phase |
| b1 | Output secondary winding |
| b20 | First connection point |
| b21 | Second connection point |
| C | Third phase |
| c1 | Output secondary winding |
| c20 | First connection point |
| c21 | Second connection point |

**Claims**

1. A three-phase transformer comprising:

a primary winding (1) and a secondary winding (2) for each phase (A, B, C) of the three-phase transformer, at least one additional winding (3) per phase (A, B, C), wherein each additional winding (3) is connected to a power electronics tap changer, PETC (4), having respective outputs (a, b, c),
wherein each additional winding (3) comprises a first connection point (a20, b20, c20) and a second connection point (a21, b21, c21), and
wherein the first connection point (a20, b20, c20) and the second connection point (a21, b21, c21) are associated with different phases (A, B, C).

2. Three-phase transformer according to claim 1, wherein the additional winding (3) is configured to add an in-quadrature voltage vector and/or create a phase-shift of a total output voltage.

3. Three-phase transformer according to claim 1 or 2, wherein the at least one PETC (4) is configured to add an in-quadrature voltage vector and/or create a phase shift of a total output voltage.

4. Three-phase transformer according to any one of claims 1 to 3, wherein the additional windings (3) are provided on a secondary side of the three-phase transformer,

wherein an output (a1) of the secondary winding (2) of a first phase (A) is connected to the first connection point (c20) of the additional winding (3) of a third phase (C),
an output (b1) of the secondary winding (2) of a second phase (B) is connected to the first connection point (a20) of the additional winding (3) of the first phase (A), and
an output (c1) of the secondary winding (2) of the third phase (C) is connected to the first connection point (b20) of the additional winding (3) of the second phase (B).

5. Three-phase transformer according to any one of claims 1 to 4, wherein each PETC (4) comprises at least one first switch (41) connected to the first connection point (a20, b20, c20) and at least one second switch (41) connected to the second connection point (a21, b21, c21).

6. Three-phase transformer according to claim 5, wherein each PETC (4) comprises a third connection point (a22) and at least one third switch (41), wherein each PETC (4) is configured to create a bi-directional phase shift.

7. Three-phase transformer according to any one of claims 5 or 6, wherein the switches (41) are semiconductor switches.

8. Three-phase transformer according to any one of claims 5 to 7, wherein the switches (41) are configured to dynamically and continuously output a voltage of the respective additional winding (3).

9. Three-phase transformer according to any one of claims 1 to 8, wherein the transformer further comprises a controller configured to control the PETCs (4).

10. Three-phase transformer according to any one of claims 1 to 9, wherein the at least one additional winding (3) is provided on a primary side or a secondary side, and/or
wherein the three phases (A, B, C) are connected as a delta connection or a star connection.

11. Three-phase transformer according to any one of claims 1 to 10, wherein the secondary windings (2) are connected as a delta connection and the additional windings (3) are connected as a star connection, or
wherein the secondary windings (2) are connected as a star connection and the additional windings (3) are connected as a delta connection.

12. Three-phase transformer according to any one of claims 1 to 11, wherein the additional windings (3) are provided on a secondary side of the three-phase transformer,

> wherein an output (a1) of the secondary winding (2) of a first phase (A) is connected to an input of the secondary winding (2) of a second phase (B),
> an output (b1) of the secondary winding (2) of the second phase (B) is connected to an input of the secondary winding (2) of a third phase (C), and
> an output of the secondary winding (2) of the third phase (C) is connected to an input of the secondary winding (2) of the first phase (A);
> and wherein the output (a1) of the secondary winding (2) of the first phase (A) is connected to the first connection point (c20) of the additional winding (3) of the third phase (C),
> the output (b1) of the secondary winding (2) of the second phase (B) is connected to the first connection point (a20) of the additional winding (3) of the first phase (A), and
> the output (c1) of the secondary winding (2) of the third phase (C) is connected to the first connection point (b20) of the additional winding (3) of the second phase (B).

13. Three-phase transformer according to any one of claims 1 to 11, wherein the additional windings (3) are provided on a secondary side of the three-phase transformer,

> wherein the first connection point (a20) of the additional winding (3) of a first phase (A) is connected to the input of the secondary winding (2) of the second phase (B) and the output (c) of the PETC (4) of the third phase (C),
> the first connection point (b20) of the additional winding (3) of a second phase (B) is connected to the input of the secondary winding (2) of the third phase (C) and the output (a) of the PETC (4) of the first phase (A), and
> the first connection point (c20) of the additional winding (3) of the third phase (C) is connected to the input of the secondary winding (2) of the first phase (A) and the output (b) of the PETC (4) of the second phase (B).

14. Three-phase transformer according to any one of claims 1 to 13, wherein the transformer comprises at least one further additional winding (3), wherein the further additional winding (3) is connected to an additional PETC (4) and is connected in-phase,
wherein the additional PETC (4) is configured to provide in-phase voltage control.

15. Three-phase transformer according to any one of claims 9 to 14, wherein the controller is configured to control the PETC (4) to cancel voltage harmonics, and/or

wherein the controller is configured to control the PETC (4) to cancel voltage sags.

Fig. 1

Fig. 2A

Fig. 2B

Fig. 2C

Fig. 2D

**Fig. 3A**

**Fig. 3B**

**Fig. 4A**

**Fig. 4B**

**Fig. 5A**

**Fig. 5B**

**Fig. 5C**

**Fig. 5D**

**Fig. 6**

Europäisches
Patentamt

European
Patent Office

Office européen
des brevets

# EUROPEAN SEARCH REPORT

Application Number

EP 23 18 2850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANDULA R P ET AL: "Design considerations and experimental results for a 12.47-kV 3-phase 1 MVA power router", 2015 IEEE ENERGY CONVERSION CONGRESS AND EXPOSITION (ECCE), IEEE, 20 September 2015 (2015-09-20), pages 5000-5007, XP032801301, DOI: 10.1109/ECCE.2015.7310365 [retrieved on 2015-10-27] * figures 1-4, 10 * | 1-15 | INV. H02J3/18 H02M5/293 ADD. H02P13/06 H02M1/12 |
| X | MON-NZONGO DANIEL LEGRAND ET AL: "An Improved Topology for Multipulse AC/DC Converters Within HVDC and VFD Systems: Operation in Degraded Modes", IEEE TRANSACTIONS ON INDUSTRIAL ELECTRONICS, IEEE SERVICE CENTER, PISCATAWAY, NJ, USA, vol. 65, no. 5, 1 May 2018 (2018-05-01), pages 3646-3656, XP011676053, ISSN: 0278-0046, DOI: 10.1109/TIE.2017.2762646 [retrieved on 2018-01-16] * figures 4-6 * | 1-15 | |
| X | ROGER A HEDDING: "Some old and new thoughts on phase angle regulator protection", PROTECTIVE RELAY ENGINEERS, 2010 63RD ANNUAL CONFERENCE FOR, IEEE, PISCATAWAY, NJ, USA, 29 March 2010 (2010-03-29), pages 1-13, XP031679156, ISBN: 978-1-4244-6073-1 * figures 4-5 * | 1-4,6, 10,11,15 | |

TECHNICAL FIELDS SEARCHED (IPC)

H02J
H02P
H02M

-/--

The present search report has been drawn up for all claims

| Place of search | Date of completion of the search | Examiner |
|---|---|---|
| The Hague | 1 December 2023 | Madouroglou, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 23 18 2850

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 979 483 A1 (HITACHI ENERGY SWITZERLAND AG [CH]) 6 April 2022 (2022-04-06) * figures 1-17 * | 1-15 | |

**TECHNICAL FIELDS SEARCHED (IPC)**

The present search report has been drawn up for all claims

| Place of search | Date of completion of the search | Examiner |
|---|---|---|
| The Hague | 1 December 2023 | Madouroglou, E |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 2850

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2023

| Patent document cited in search report | | Publication date | Patent family member(s) | | Publication date |
|---|---|---|---|---|---|
| EP 3979483 | A1 | 06-04-2022 | CN | 116235399 A | 06-06-2023 |
| | | | EP | 3979483 A1 | 06-04-2022 |
| | | | JP | 2023548280 A | 16-11-2023 |
| | | | KR | 20230049742 A | 13-04-2023 |
| | | | US | 2023327571 A1 | 12-10-2023 |
| | | | WO | 2022073919 A1 | 14-04-2022 |

EPO FORM P0459

For more details about this annex : see Official Journal of the European Patent Office, No. 12/82